# NEUE EUROPÄISCHE PATENTSCHRIFT

(11) **EP 1 028 230 B2**
(45) Veröffentlichungstag und Bekanntmachung des Hinweises auf die Entscheidung über den Einspruch: **03.09.2008**
(45) Hinweis auf die Patenterteilung: 17.12.2003
(21) Anmeldenummer: 99810106.7
(22) Anmeldetag: 09.02.1999
(51) Int. Cl.: F01D 5/18, F02C 7/12

(54) **Gekühlte Gasturbinenkomponente mit verstellbarer Kühlung**
Cooled gas turbine component with adjustable cooling
Pièce refroidie de turbine à gaz avec refroidissement ajustable

(43) Veröffentlichungstag der Anmeldung: 16.08.2000
(73) Patentinhaber: ALSTOM (Switzerland) Ltd, 5401 Baden (CH)
(72) Erfinder: Fitzsimons, Conor, Dr., 5408 Ennetbaden (CH); Semmler, Klaus, 79787 Lauchringen (DE); Weigand, Bernhard, Dr., 79787 Lauchringen (DE)
(74) Vertreter: Rösler, Uwe

(56) Entgegenhaltungen:
- DE-A- 3 028 137
- FR-A- 2 611 230
- JP-A- 6 174 510
- US-A- 2 811 813
- US-A- 4 213 738
- US-A- 4 526 512
- US-A- 4 595 298
- US-A- 4 805 398
- US-A- 5 022 817
- VDI-Berichte Nr. 1438 v. 1998, S. 221-228
- Dubbel, Handbuch für Maschinenbau, Springer Verlag Berlin heidelberg, Ausgabe 1995, Sk.14, W15-W16
- Brockhaus Naturwissenschaft und Technik, Ausgabe 1983, erster Band, S.150

## Beschreibung

### Technisches Gebiet

Die vorliegende Erfindung betrifft ein Kühlungssystem mit einer kühlbaren Komponente einer Gasturbine, welche Komponente im Betrieb vollständig oder teilweise von einem heissen Gas umströmt ist, welche Komponente in ihrem Inneren mit wenigstens einem Hohlraum versehen ist, welchen Hohlraum im Betrieb ein Kühlmittel durchströmt, welcher Hohlraum mit Mitteln zur Zufuhr des Kühlmediums und Mitteln zur Abfuhr des Kühlmediums verbunden ist, welche Mittel einen Strömungsweg des Kühlmediums bilden. Sie betrifft weiterhin ein Verfahren zur Regelung der Kühlluftzufuhr, sowie ein Verfahren zur Herstellung der erfindungsgemässen Komponenten.

### Stand der Technik

Der hohe Wirkungsgrad und die Leistungsdichte moderner Wärmekraftmaschinen erfordern hohe Temperaturen der Arbeitsfluide, die in vielen Fällen jenseits der zulässigen Materialtemperatur wirtschaftlich einsetzbarer Werkstoffe liegen. Dies gilt insbesondere in der Gasturbinentechnik.

Die heute üblichen thermodynamischen Zustände des Heissgases in Gasturbinen erfordern eine effiziente Kühlung der Komponenten, die mit dem Heissgas in Kontakt sind. Die thermisch hochbelasteten Komponenten werden dabei entweder rein konvektiv oder mit einer Kombination von Konvektionsund Filmkühlung gekühlt.

Die für die Kühlung dem Prozess entzogene bereits verdichtete Luft geht dem Arbeitsprozess zumindest teilweise verloren, was sich insbesondere auf den Wirkungsgrad negativ auswirkt. Andererseits verringert eine mangelhafte Kühlung die Lebensdauer der Komponente erheblich. Die Kühlung der besonders beanspruchten Leitschaufeln der ersten Turbinenstufe einer Gasturbine wird daher für die heisseste zu erwartende Temperatur der Heissgasanströmung ausgelegt. Dabei muss gerade unmittelbar am Brennkammeraustritt mit einem in Umfangsrichtung sehr inhomogenen Temperaturfeld gerechnet werden. Um eine ausreichende Kühlung der jeweils am höchsten belasteten Schaufeln zu gewährleisten, werden andere Schaufeln mit wesentlich mehr Kühlluft versorgt als notwendig.

Weiterhin sind auch die sehr unterschiedlichen Betriebsbedingungen zu berücksichtigen. Auch dann, wenn eine Maschine im Teillastbetrieb mit reduzierten Heissgastemperaturen betrieben wird, bleibt der Kühlluftanteil weitgehend konstant, es wird also wesentlich mehr Kühlluft verbraucht, als zur Aufrechterhaltung einer ausreichenden Kühlung notwendig wäre.

US 5,022,817 gibt eine Vorrichtung an, mit der der Kühlluftmassenstrom durch temperaturemrfindliche Stellglieder variiert wird. Die Vorrichtung ermöglicht eine Veränderung des Kühlluftmassenstroms in Abhängigkeit von der Temperatur des Stellgliedes; eine Regelung des Kühlluftmassenstroms zur Konstanthaltung einer Temperatur auf einem Sollwert ist dabei jedoch nicht möglich.

Weiterhin werden Maschinen unabhängig von den tatsächlichen Lastzyklen so gekühlt, dass eine möglichst hohe Komponentenlebensdauer in einer Grundlast-Vollastmaschine erreicht wird, auch dann, wenn der Betreiber im Interesse eines höheren Wirkungsgrades und höherer Nutzleistung eine geringere Standzeit der Komponente akzeptieren würde.

Zusammenfassend bleibt festzustellen, dass nach dem Stand der Technik die Kühlung der thermisch hochbelasteten Komponenten einer Gasturbine nach einem starren Schema erfolgt. Dabei wird die Kühlluftmenge auf Kosten der Effizienz der Energieumwandlung tendenziell überdimensioniert. Wünschenswert wäre es hingegen, die Kühlluftmenge entsprechend den realen Gegebenheiten und den Betriebsbedingungen zu variieren und zu regeln.

In der DE 3424229 A1 ist eine Kühlluftströmungs-Modulationseinrichtung für Gasturbinen beschrieben, bei der die Kühlluftzufuhr in Abhängigkeit von sich veränderlichen Betriebsbedingungen der Gasturbine variiert wird. Hierzu ist ein von Extern steuerbares Drosselelement in der Kühlmittelzufuhr vorgesehen.

### Darstellung der Erfindung

An dieser Stelle greift die Erfindung. Ziel der vorliegenden Erfindung ist es also, ein Kühlungssystem mit einer kühlbaren Komponente einer Gasturbine, welche Komponente im Betrieb vollständig oder teilweise von einem heissen Gas umströmt ist, welche Komponente in ihrem Inneren mit wenigstens einem Hohlraum versehen ist, welchen Hohlraum im Betrieb ein Kühlmittel durchströmt, welcher Hohlraum mit Mitteln zur Zufuhr des Kühlmediums und Mitteln zur Abfuhr des Kühlmediums verbunden ist, welche Mittel einen Strömungsweg des Kühlmediums bilden anzugeben, bei welcher der Kühlluftanteil variabel ist.

Erfindungsgemäss wird dies erreicht, durch die im Anspruch 1 enthaltenen Merkmale. Bevorzugte Ausführungsformen ergeben sich aus den Unteransprüchen.

Weiterhin wird in den Unteransprüchen ein Verfahren zur Herstellung der erfindungsgemässen Komponente angegeben.

### Kurze Beschreibung der Zeichnung

Die Erfindung wird nachfolgend anhand der Zeichnung näher erläutert. Im einzelnen zeigen
- Fig. 1 einen Querschnitt durch eine konvektionsgekühlte Turbinenschaufel
- Fig. 2 ein Beispiel für die Kühlluftversorgung einer Turbïnenschaufel
- Fig. 3 eine konvektiv- und filmgekühlte Turbinenschaufel
- Fig. 4 einen Auschnitt der filmgekühlten Vorderkante einer Turbinenschaufel, mit variabel drosselbaren Filmkühlungslöchern.

Im Sinne einer besseren Übersichtlichkeit sind alle nicht unmittelbar erfindungswesentlichen Details weggelassen. Weiterhin darf die Tatsache, dass sich das Ausführungsbeispiel auf Turbinenschaufeln beschränkt, nicht in einem einschränkenden Sinne verstanden werden. Die Erfindung ist für den Durchschnittsfachmann ohne weiteres auf andere gekühlte Gasturbinenkomponenten übertragbar.

### Weg zur Ausführung der Erfindung

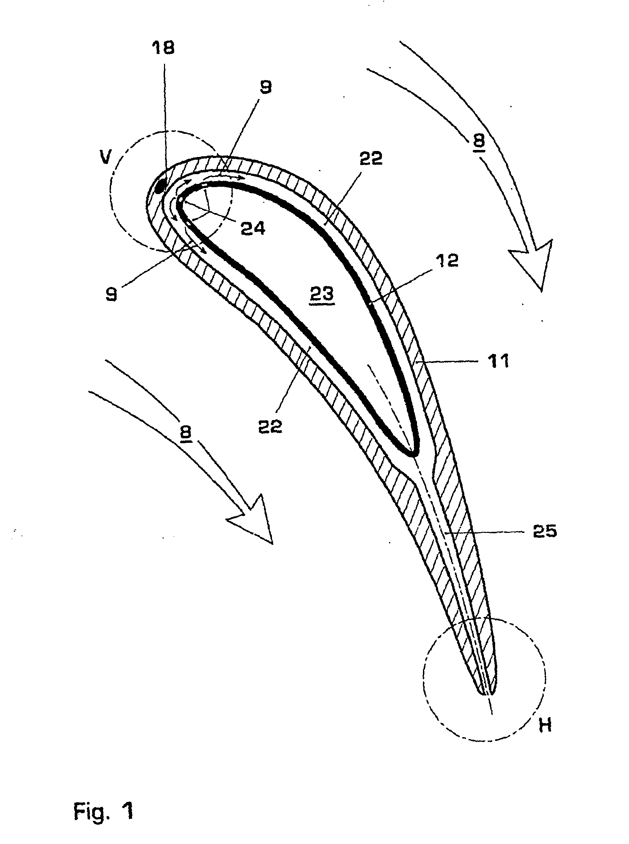

Fig. 1 zeigt eine rein konvektiv gekühlte Turbinenschaufel 11 in einer Heissgasströmung 8, die in Ihrem Inneren einen Hohlraum einschliesst, in dem Kühlluft geführt wird. In diesem Ausführungsbeispiel ist in den Hohlraum ein als Prallkühlblech ausgeführter Einsatz 12 eingebaut, der den Hohlraum im Inneren der Schaufel in einen zentralen Raum 23 und einen äusseren Raum 22 teilt. Prinzipiell könnte das Innere der Schaufel auch vollkommen anders gestaltet sein. Sowohl die Existenz des Einsatzes 12 als auch dessen Gestaltung als Prallkühlblech sind zunächst erfindungsunwesentlich und fakultativ. Kühlluft wird vom Schaufelfuss dem zentralen Hohlraum 23 zugeführt. Das Prallkühlblech 12 ist im Bereich der Schaufelvorderkante V mit Bohrungen 24 versehen, um eine Prallkühlung der thermisch besonders hoch belasteten Schaufelvorderkante V zu realisieren. Die Kühlluft tritt durch die Bohrungen 24 aus dem zentralen Hohlraum 23 aus, und trifft mit hohem Impuls auf das Material der Schaufel 11 im Bereich der Vorderkante V, wodurch hier ein verbesserter Wärmeübergang von der Wand zur Kühlluft erzielt wird. Die Kühlluft strömt sukzessive durch den äusseren Raum 22 und einen Kanal 25 in der Schaufelhinterkante H aus dem Hohlraum im Inneren der Schaufel ab, wobei alle Bereiche der Schaufel 11 gekühlt werden.

Weiterhin ist die Schaufel an ihrer Vorderkante V mit einem Thermoelement 18 versehen. Dieses ist jedoch an dieser Stelle bei der Ausführung einer variablen Kühlung noch nicht wesentlich und kommt erst im Zusammenhang mit einer unten zu erläuternden Regelung der Kühlluftversorgung zum Tragen.

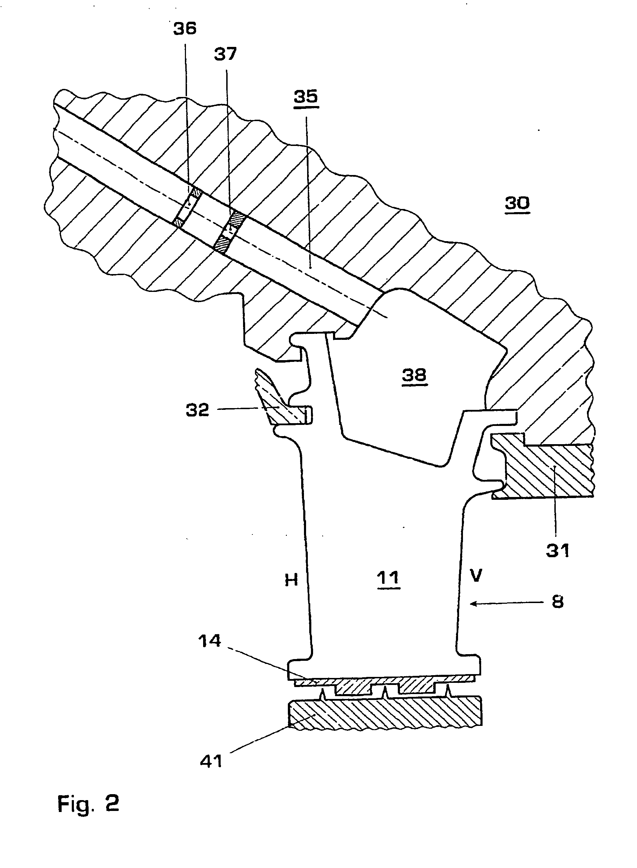

in Fig. 2 ist die Schaufel 11 als Leitschaufel im Gehäuse einer Gasturbine eingebaut. Der Schaufelkopf 14 bildet mir dem Dichtsegment 41 eine Labyrinthdichtung. Am Schaufelfuss sind Wärmestausegmente 31, 32 zu erkennen. Die Kühlluft wird über eine Zuleitung 35 und eine Kavität 38 in den hier nicht dargestellten Hohlraum im Inneren der Schaufel geführt. Die Kühlluftmenge kann über in der Leitung 35 eingebaute Drosselstellen wie die Blende 37 eingestellt werden. Erfindungsgemäss wird die Drosselstelle 37 derart gestaltet, dass der freie Durchströmquerschnitt variiert werden kann, beispielsweise durch eine Ausführung als von aussen verstellbare Irisbiende, wodurch die Kühlluftmenge während des Betriebs verändert werden kann. Hierzu sind weiterhin hier nicht dargestellte Mittel notwendig, die eine Verstellung der Drosselstelle während des Betriebes der Gasturbine von aussen ermöglichen. Eine solche Verstellung könnte beispielsweise auf mechanischem oder hydraulischem Wege erfolgen. Die konstruktive Ausgestaltung eines solchen Verstellmechanismus ist jedoch nicht Gegenstand der vorliegenden Erfindung, weshalb hier auf weitere Ausführungen oder Spezifikationen jedwelcher Art verzichtet wird.

Fakultativ ist der Einsatz einer weiteren Blende 36 möglich, die als Messblende zur Bestimmung des Kühlluftmassenstroms dient.

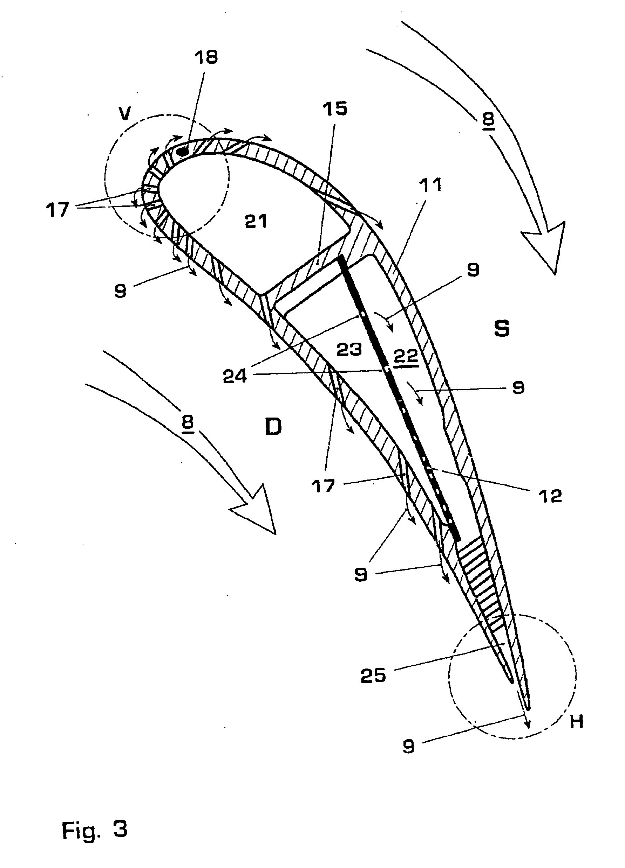

In Fig. 3 ist ein Querschnitt durch eine sowohl konvektiv als auch mittels Filmkühlung gekühlte Schaufel 11 dargestellt. Auffallend ist der Trennsteg 15, der den Innenraum der Schaufel zweiteilt. Stromab des Trennsteges 15 ist ein Prallkühleinsatz 12 vorhanden. Kühlluft strömt zunächst in den Hohlraum 23 ein. Ein Teil dieser Kühlluft 9 strömt durch die Filmkühlungslöcher 17 auf der Druckseite D der Schaufel zur Schaufelaussenseite, während ein zweiter Anteil der Kühlluft 9 durch die Bohrungen 24 des Prallkühleinsatzes 12 mit hoher Geschwindigkeit in den Hohlraum 22 einströmt und die Saugseite S der Schaufel durch Prallkühlung kühlt, und schliesslich durch einen Kanal 25 an der Schaufelhinterkante abströmt. Die Zufuhr der Kühlluft zu dem Hohlraum 23 erfolgt hierbei analog zu der Darstellung in Fig. 2, wobei die Kühlluftmenge mittels der variablen Drosselstelle 37 verändert werden kann.

Im Bereich der Schaufelvorderkante V ist hingegen eine reine Filmkühlung realisiert. Dabei strömt die Kühlluft 9 durch den Hohlraum 21 und die Filmkühlungslöcher 17 zur Schaufelaussenseite. Aufgrund der vorliegenden Druckverhältnisse ist es nicht ohne weiteres möglich, die Kühlluftmenge durch eine variable Drosselung der Zuströmung in den Hohlraum 21 zu regeln. Unter Umständen ist der Vordruck der Kühlluft nur geringfügig grösser als der Druck der Aussenanströmung im Staupunkt der Schaufel. Durch eine Drosselung der zuströmenden Kühlluft könnte ein Heissgaseinbruch in den Hohlraum 21 erfolgen, was nahezu sicher zum Bauteilversagen führt. Eine Variation der Kühlluftmenge kann also nur durch eine variable Drosselung der Abströmung aus dem Hohlraum 21, also eine variable Geometrie der Filmkühlungslöcher 17 im Bereich der Schaufelvorderkante V, erfolgen.

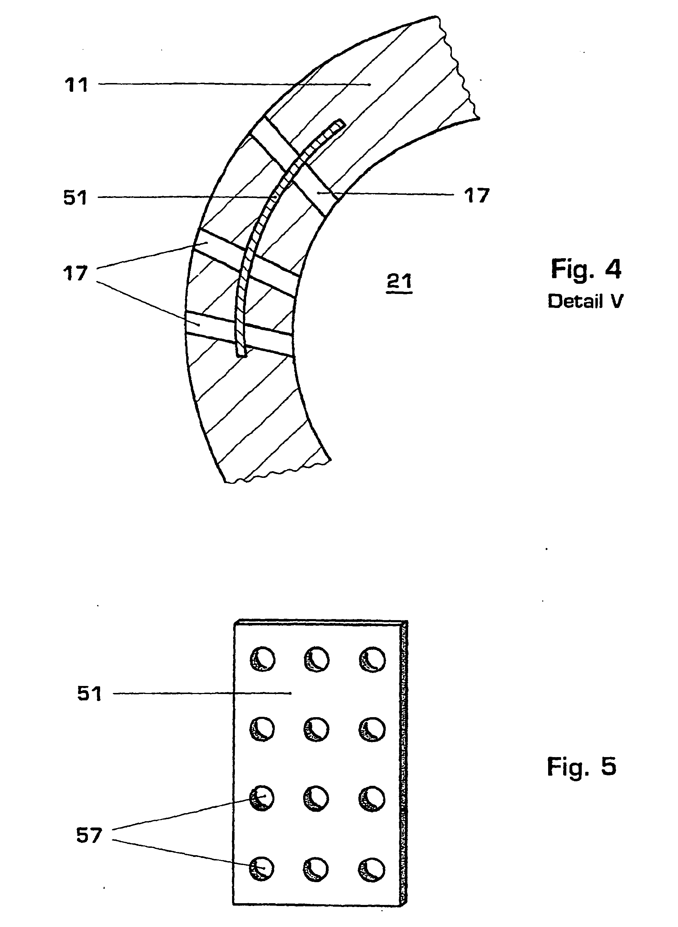

Dies ist in Fig. 4 dargestellt, die die Schaufelvorderkante V in einem grosseren Massstab zeigt. In das Material der Schaufel 11 ist ein Plättchen 51 eingesetzt, das die Filmkühlungslöcher 17 verdeckt. Wie in Fig. 5 zu erkennen, ist das Plättchen 51 gelocht. Dabei entspricht die Anordnung der Bohrungen 57 derjenigen der Filmkühlungslöcher 17 in der Schaufel. Durch ein Verschieben des Plättchens 51 relativ zur Schaufel 11 überdecken die Löcher 57 die Filmkühlungslöcher 17 ganz oder teilweise, wodurch unterschiedliche Querschnitte für die Abströmung der Kühlluft aus dem Hohlraum 21 freigegeben werden. Somit ist wiederum eine variable Drosselung des Kühlluftweges und realisiert, und es ist die Möglichkeit gegeben, die Kühlluftmenge zu verändern.

Die Herstellung einer Schaufel mit drosselbaren Filmkühlungslöchern erfolgt zweckmässig, indem ein dünner Schlitz in die Schaufel erodiert wird, bevor die Filmkühlungslöcher in diese Schaufel eingebracht wurden. In diesen Schlitz wird das Plättchen mit geringem Spiel verschiebbar eingesetzt. Die Filmkühlungslöcher werden dann in einem Arbeitsgang in die Schaufel und das Plättchen eingebracht.

Mittels der variablen Kühlluftversorgung kann eine Regelung der Materialtemperatur der gekühlten Komponenten realisiert werden, wenn diese, wie in Fig. 1 und Fig. 3 dargestellt, mit Thermoelementen 18 oder anderen Vorrichtungen zur Temperaturmessung ausgestattet sind. Wenn die - in diesem Beispiel an der Schaufelvorderkante - gemessene Temperatur einen vorgegebenen Sollwert überschreitet, wird die Kühlluftmenge erhöht. Umgekehrt wird die Kühlluft weiter angedrosselt, wenn die gemessene Materialtemperatur den vorgegebenen Sollwert unterschreitet. Bei der Realisierung einer solchen Regelung ist in jede Kühlluft-Zuführleitung mit Vorteil die in Fig. 2 dargestellte Blende 36 eingebaut. Durch eine Messung des Druckabfalls über die Blende kann der Kühlluftmassenstrom bestimmt werden.

### Bezugszeichenliste

- 8: Heissgasströmung
- 9: Kühlluft
- 11: Turbinenschaufel
- 12: Prallkühlblech
- 14: Schaufelkopf
- 15: Trennsteg
- 17: Filmkühlungslöcher
- 18: Thermoelement
- 21: Hohlraum im Inneren der Schaufel
- 22: Hohlraum im Inneren der Schaufel
- 23: Hohlraum im Inneren der Schaufel
- 24: Bohrungen
- 25: Kanal
- 31: Wärmestausegment
- 32: Wärmestausegment
- 35: Kühlluftzufuhrleitung
- 36: Messblende
- 37: variable Drosselstelle, Blende
- 38: Kavität
- 41: Dichtsegment
- 51: Plättchen
- 57: Bohrungen
- D: Schaufeldruckseite
- H: Schaufelhinterkante
- S: Schaufelsaugseite
- V: Schaufelvorderkante

## Patentansprüche

1. Kühlungssystem, umfassend eine kühlbare Komponente (11) einer Gasturbine, sowie Mittel (35,38) zur Zufuhr eines Kühlmittels (9) und Mittel (17,25) zur Abfuhr des Kühlmittels, wobei die Komponente (11) im Betrieb vollständig oder teilweise von einem heißen Gas (8) umströmt ist, und wobei die Komponente in ihrem Inneren mit wenigstens einem Hohlraum (21,22,23) versehen ist, welchen Hohlraum im Betrieb ein das Kühlmittel (9) durchströmt, welcher Hohlraum mit den Mitteln zur Zufuhr des Kühlmediums und den Mitteln zur Abfuhr des Kühlmediums verbunden ist, welche Mittel einen Strömungsweg des Kühlmediums bilden, und wobei in dem Strömungsweg wenigstens eine während des Betriebes der Gasturbine durch externe Eingriffe verstellbare Drosselstelle (37) für das Kühlmedium vorhanden ist,
**dadurch gekennzeichnet, dass** die verstellbare Drosselstelle als verstellbare Blende in einer Zufuhrleitung (35) für Kühlmedium ausgeführt ist,
dass die Mittel zur Abfuhr von Kühlmedium Filmkühlungslöcher (17) sind, und dass ein gelochtes Plättchen (51) in die Komponente eingesetzt ist, welches Plättchen mindestens einen Teil der Filmkühlungslöcher bedeckt, und wobei die Anordnung der Löcher (57) in dem Plättchen der Anordnung der Filmkühlungslöcher (17) entspricht, welches Plättchen (51) weiterhin relativ zu der Komponente (11) verschiebbar angeordnet ist, dergestalt, dass die Löcher im Plättchen die Durchströmquerschnitte der Filmkühlungslöcher variabel freigeben, wodurch eine verstellbare Drosselung des abströmenden Kühlmediums entsteht.

2. Kühlungssystem nach Anspruch 1,
**dadurch gekennzeichnet, dass** in mindestens einer Zufuhrleitung für Kühlluft eine Vorrichtung (36) zur Messung des Kühlluftmassenstroms eingebaut ist.

3. Verfahren zur Herstellung einer kühlbaren Komponente (11) des Kühlungssystems nach Anspruch 1 oder 2, beinhaltend die folgenden Arbeitsschritte:
- Einbringen eines Schlitzes in die Komponente (11), bevor die Filmkühlungslöcher hergestellt wurden,
- Einsetzen des Plättchens (51) in den Schlitz,
- Einbringen der Filmkühlungslöcher (17) in die Komponente und der Bohrungen (57) in das Plättchen (51) in einem Arbeitsgang.

## Claims

1. Cooling system comprising a coolable component (11) of a gas turbine and also means (35, 38) for suppling a cooling medium (9) and means (17,25) for carrying away the cooling medium, the component (11) having a hot gas (8) flowing completely or partially around it during operation, and the component being provided in its interior with at least one hollow space (21, 22, 23), through which hollow space the cooling medium (9) flows during operation, which hollow space is connected to the means for supplying the cooling medium and the means for carrying away the cooling medium, which means form a flow path for the cooling medium, and in which there is in the flow path at least one restricting point (37) for the cooling medium, which is adjustable by external interventions during the operation of the gas turbine, **characterized in that** the adjustable restricting point is designed in the form of an adjustable diaphragm in a supply line (35) for the cooling medium,
**in that** the means for carrying away cooling medium are film-cooling holes (17), and **in that** a perforated platelet (51) is inserted into the component, which platelet covers at least some of the film-cooling holes, and the arrangement of the holes (57) in the platelet corresponds to the arrangement of the film-cooling holes (17), which platelet (51) is further arranged in a displaceable manner in relation to the component (11), in such a way that the holes in the platelet variably clear the through-flow cross sections of the film-cooling holes, whereby an adjustable restriction of the cooling medium flowing away is produced.

2. Cooling system according to Claim 1, **characterized in that** a device (36) for measuring the mass flow of the cooling air is installed in at least one supply line for cooling air.

3. Method of producing a coolable component (11) of the cooling system according to Claim 1 or 2, comprising the following working steps:
• making a slit in the component (11) before the film-cooling holes have been produced,
• inserting the platelet (51) into the slit, making the film-cooling holes (17) in the component and the boreholes (57) in the platelet (51), in one operation.

## Revendications

1. Système de refroidissement comprenant un composant refroidissable (11) d'une turbine à gaz, ainsi que des moyens (35, 38) pour l'alimentation en réfrigérant (9) et des moyens (17, 25) pour l'évacuation du réfrigérant, le composant (11) étant entouré en fonctionnement complètement ou partiellement par un gaz chaud (8), et le composant étant pourvu à l'intérieur d'au moins un espace creux (21, 22, 23), lequel espace creux est traversé en fonctionnement par le réfrigérant (9), lequel espace creux est connecté aux moyens pour l'alimentation en réfrigérant et aux moyens pour l'évacuation du réfrigérant, lesquels moyens forment un parcours d'écoulement du réfrigérant, et dans lequel, dans le parcours d'écoulement, au moins un étranglement (37) réglable pendant le fonctionnement de la turbine à gaz par des moyens extérieurs est prévu pour le réfrigérant, **caractérisé en ce que** l'étranglement réglable est réalisé sous la forme d'un diaphragme réglable dans une conduite d'alimentation (35) pour le réfrigérant, **en ce que** les moyens pour l'évacuation du réfrigérant sont des trous de refroidissement par film (17), et **en ce qu'**une petite plaque perforée (51) est insérée dans le composant, laquelle petite plaque recouvre au moins une partie des trous de refroidissement par film, et l'agencement des trous (57) dans la petite plaque correspondant à l'agencement des trous de refroidissement par film (17), laquelle petite plaque (51) étant en outre disposée de manière déplaçable par rapport au composant (11) de telle sorte que les trous dans la petite plaque libèrent de façon variable les sections transversales d'écoulement des trous de refroidissement par film, ce qui produit un étranglement réglable du réfrigérant s'évacuant.

2. Système de refroidissement selon la revendication 1, **caractérisé en ce que** l'on intègre dans au moins une conduite d'alimentation pour l'air de refroidissement un dispositif (36) pour mesurer le débit massique de l'air de refroidissement.

3. Procédé de fabrication d'un composant refroidissable (11) du système de refroidissement selon la revendication 1 ou 2, comportant les étapes de travail suivantes ;
- réalisation d'une fente dans le composant (11) avant la fabrication des trous de refroidissement par film ;
- insertion de la petite plaque (51) dans la fente ;
- réalisation des trous de refroidissement par film (17) dans le composant et des alésages (57) dans la petite plaque (51) en une seule passe de travail.
